# EUROPÄISCHE PATENTANMELDUNG

(11) **EP 2 463 982 A1**
(43) Veröffentlichungstag der Anmeldung: **13.06.2012**
(21) Anmeldenummer: 11154144.7
(22) Anmeldetag: 11.02.2011
(51) Int. Cl.: H02J 7/00, H01R 13/66

(54) **Elektrische Ladevorrichtung für Mobiltelefone und dergleichen**

(30) Priorität: 10.12.2010 DE 102010054140
(71) Anmelder: GIRA Giersiepen GmbH & Co. KG, 42477 Radevormwald (DE)
(72) Erfinder: Lohmann, Achim, 58579, Schalksmühle (DE); Siepen, Andreas, 51515, Kürten (DE); Gediger, Frank, 42279, Wuppertal (DE); Seifert, Roland, 59071, Hamm (DE); Kemmann, Harald, 42555, Velbert (DE)
(74) Vertreter: Patentanwälte Dr. Solf & Zapf

(57) **Zusammenfassung**

Die vorliegende Erfindung betrifft eine Ladevorrichtung (1), insbesondere zum elektrischen Laden eines mit einem wiederaufladbaren Energiespeicher versehenen elektronischen Gerätes, z. B. eines Mobiltelefons. Die Ladevorrichtung besteht aus einem Gehäuse (2) mit einer in dem Gehäuse (2) angeordneten Ladeelektronik, wobei eine Rückwand des Gehäuses (2) ein Steckerteil eines Netzsteckers und eine Frontwand (6) des Gehäuses (2) eine feststehende Geräteauflage (7) für das elektronische Gerät aufweist. In der Geräteauflage (7) ist ein Ladestecker (13) angeordnet. In einem Abstand zur Geräteauflage (7) ist eine Gerätestütze (14) am Gehäuse (2) derart schwenkbar gelagert, dass die Gerätestütze (14) in einer Ladestellung in Verlängerung der Frontwand (6) des Gehäuses (2) verläuft und eine Abstützung für das zu ladende Gerät bilden kann und in einer Ruhestellung parallel zur Frontwand (6) des Gehäuses (2) verläuft und diese zumindest bis zum Ladestecker (13) abdeckt. Vorzugsweise ist die Gerätestütze (14) derart ausgebildet, dass in ihrer Ladestellung zwischen dem aufgesteckten Gerät und der Gerätestütze (14) eine federelastische Anlage einstellbar ist.

## Beschreibung

Die vorliegende Erfindung betrifft eine Ladevorrichtung, insbesondere zum elektrischen Landen eines mit einem wiederaufladbaren Energiespeicher versehenen elektronischen Gerätes, z. B. eines Mobiltelefons, bestehend aus einem Gehäuse mit einer in dem Gehäuse angeordneten Ladeelektronik, wobei eine Rückwand des Gehäuses einen Netzstecker und eine Frontwand des Gehäuses eine feststehende Geräteauflage für das elektronische Gerät aufweist, wobei in der Geräteauflage ein Ladestecker angeordnet ist.

Eine gattungsgemäße Ladevorrichtung ist aus der DE 202 11 132 U1 bekannt. Nachteilig an dieser Ladevorrichtung ist, dass das aufzuladende Mobiltelefon im auf den Ladestecker aufgesteckten Zustand ausschließlich über diese Steckverbindung mechanisch gehalten wird, wodurch alle Haltekräfte allein durch die elektrische Steckverbindung aufgenommen werden müssen. Hierdurch sind Beschädigungen der elektrischen Steckerteile im Mobiltelefon und/oder in der Ladevorrichtung bei längerem Gebrauch zu erwarten. Zudem ist der Ladestecker ungeschützt, wenn das Mobiltelefon nicht aufgesteckt ist, wodurch ebenfalls mechanische Beschädigungen und Beeinträchtigungen z. B. durch Schmutz und Feuchtigkeit nicht ausgeschlossen sind. Auch ist im in eine Netzsteckdose eingesteckten Zustand der unter Spannung stehende Ladestecker frei zugänglich, wenn das Mobiltelefon nicht aufgesteckt ist, wodurch eine Gefährdung z. B. von Kindern gegeben sein kann.

Um die vorstehenden Nachteile zu vermeiden, ist es z. B. aus der WO99/66605 bekannt, die Geräteauflage derart schwenkbar am Gehäuse zu lagern, dass der Ladestecker in einer Schwenkstellung, der Ladestellung, frei zugänglich ist und das Mobiltelefon ungehindert von oben aufgesteckt werden kann und in einer anderen Schwenkstellung, der Ruhestellung, der Geräteauflage der Ladestecker in einer Öffnung des Gehäuses aufgenommen wird, so dass er gegen äußere Einflüsse und gegen eine Berührung geschützt ist. Diese Ausbildung hat den Nachteil, dass die schwenkbare Lagerung eine mechanische Schwachstelle darstellt und zudem die elektrische Verbindung zwischen der Netzteil-Elektronik und dem Ladestecker ebenfalls der Schwenkbewegung unterliegt, weshalb deren Ausgestaltung relativ aufwändig und störanfällig ist.

Der vorliegenden Erfindung liegt die Aufgabe zu Grunde, ausgehend von der gattungsgemäßen Ladevorrichtung diese derart zu verbessern, dass sowohl ein Schutz des Ladesteckers vor äußeren Einflüssen im nicht aufgesteckten Zustand des aufzuladenden Gerätes als auch eine mechanisch verbesserte Halterung des aufzuladenden Gerätes in seiner Ladestellung vorhanden ist. Zudem soll eine kompakte und elektrisch sichere und nicht störanfällige Bauweise gewährleistet sein.

Erfindungsgemäß wird dies dadurch erreicht, dass in einem Abstand zur Geräteablage eine Gerätestütze am Gehäuse derart schwenkbar gelagert ist, dass die Gerätestütze in einer Ladestellung in Verlängerung der Frontwand des Gehäuses verläuft und eine Abstützung für das zu ladende Gerät bilden kann und in einer Ruhestellung parallel zur Frontwand des Gehäuses verläuft und diese teilweise zumindest bis zum Ladestecker abdeckt und vorzugsweise die Gerätestütze derart ausgebildet ist, dass in ihrer Ladestellung zwischen dem aufgesteckten Gerät und der Gerätestütze eine federelastische Anlage einstellbar ist.

Die Erfindung basiert somit darauf, dass die Geräteauflage fest mit dem Gehäuse verbunden ist, so dass hierdurch eine kompakte und mechanisch belastbare Einheit vorliegt. Durch die schwenkbare am Gehäuse befestigte Gerätestütze kann das aufgesteckte Gerät oberhalb des Ladesteckers abgestützt und stabilisiert werden, so dass die Steckverbindung zwischen dem Gerät und dem Ladestecker entlastet werden kann. Die federelastische Anlage in der Ladestellung der Gerätestütze zwischen dem aufgesteckten Gerät und der Gerätestütze ermöglicht einen Dickenausgleich, so dass unterschiedlich dicke Geräte sicher im aufgesteckten Zustand gehalten werden können. Weiterhin wird durch die Gerätestütze in ihrer Ruhestellung der Ladestecker derart abgedeckt, dass einerseits eine Beeinflussung durch äußere Einflüsse verhindert wird und andererseits auch der Zugriff auf den Ladestecker erschwert ist. Weitere vorteilhafte Ausgestaltungsmerkmale der Erfindung sind in den Unteransprüchen enthalten und werden an Hand der nachfolgenden Beschreibung im Einzelnen dargelegt.

Anhand der in der Zeichnung veranschaulichten Ausführungsbeispiele soll die Erfindung im Folgenden genauer erläutert werden. Es zeigen:
- Fig. 1: eine perspektivische Ansicht auf eine erfindungsgemäße Ladevorrichtung in der Ruhestellung, und zwar in Blickrichtung seitlich von vorne,

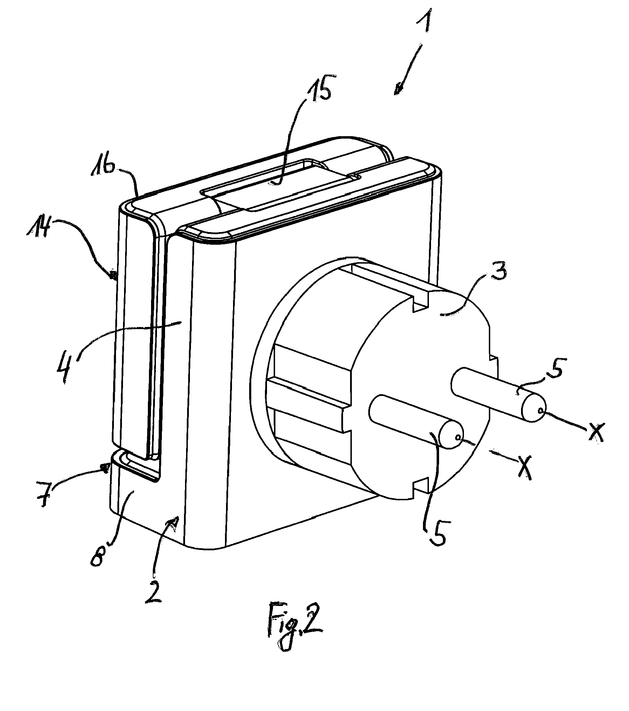

- Fig. 2: eine perspektivische Ansicht auf die Ladevorrichtung gemäß Fig. 1, jedoch in Blickrichtung seitlich von hinten,

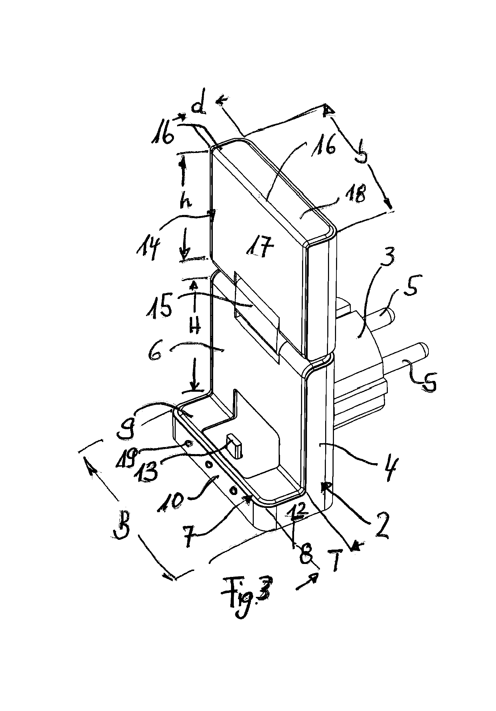

- Fig. 3: eine perspektivische Ansicht auf eine erfindungsgemäße Ladevorrichtung in der Ladestellung, und zwar in Blickrichtung seitlich von vorne,

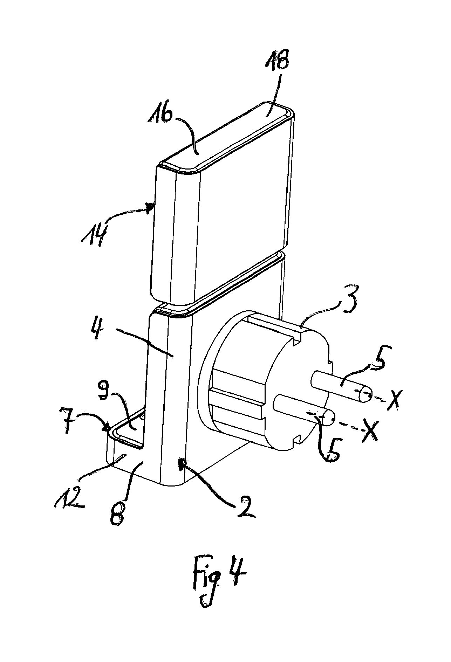

- Fig. 4: eine perspektivische Darstellung einer erfindungsgemäßen Ladevorrichtung gemäß Fig. 3 in Blickrichtung seitlich von hinten,

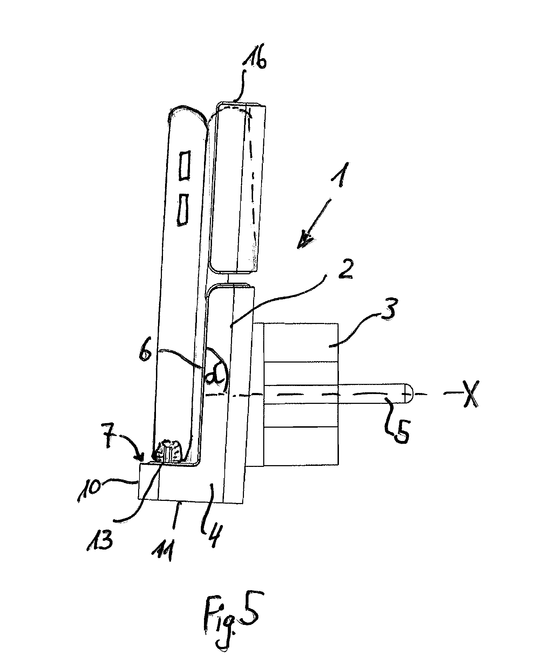

- Fig. 5: eine Seitenansicht einer erfindungsgemäßen Ladevorrichtung mit aufgestecktem elektrischem Gerät in der Ladestellung und
- Fig. 6: eine Seitenansicht der Ladevorrichtung gemäß Fig. 1.

In den verschiedenen Figuren der Zeichnung sind gleiche Teile stets mit den gleichen Bezugszeichen versehen.

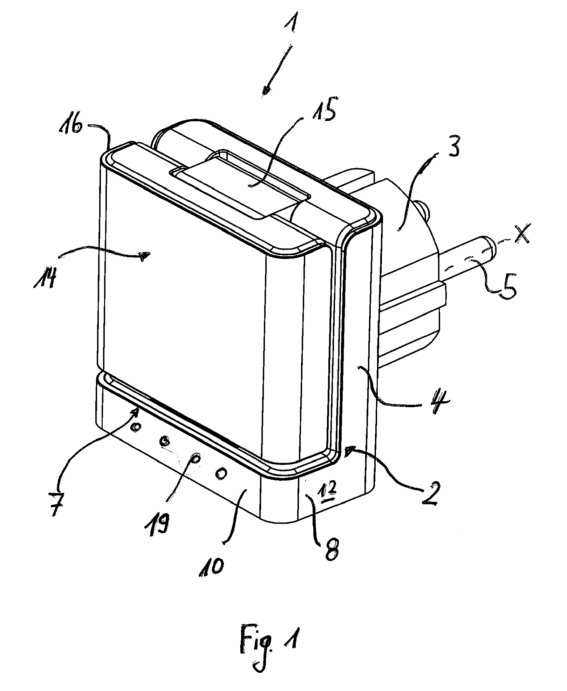

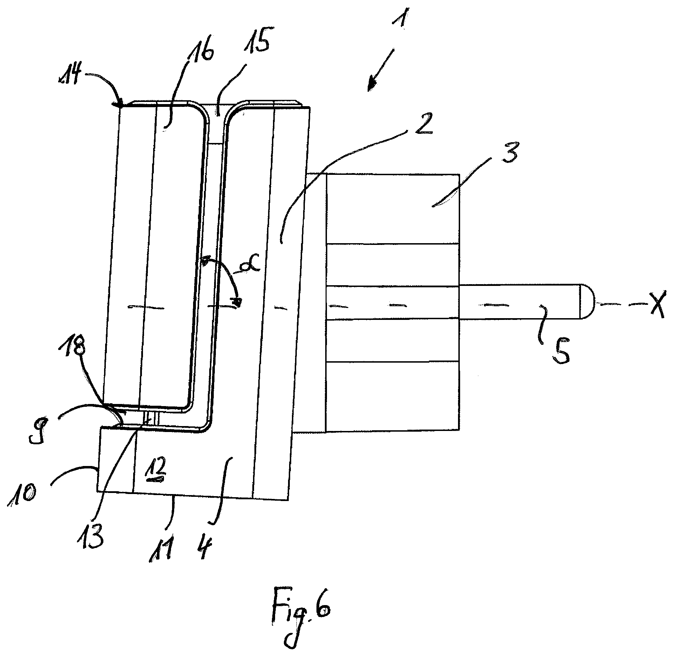

Wie in Fig. 1 dargestellt ist, besteht eine erfindungsgemäße Ladevorrichtung 1 aus einem Gehäuse 2, das aus zwei Gehäuseabschnitten 3, 4 gebildet ist. Der Gehäuseabschnitt 3 ist als Steckerteil ausgebildet, das in eine übliche Netzstrom-Steckdose eingesteckt werden kann. Hierzu weist der Gehäuseabschnitt 3 an seiner Rückwand ein Sockelteil 4 auf, aus dem z. B. Steckerkontaktstifte 5 herausragen, die jeweils eine Stiftlängsachse X aufweisen. Innerhalb des Sockelteils 4 ist zweckmäßigerweise eine nicht dargestellte elektrische Netzteilschaltung, z. B. eine elektronische Ladeelektronik ausgebildet, womit die jeweilige Netzspannung auf eine Ladespannung eines mittels der erfindungsgemäßen Ladevorrichtung 1 aufzuladenden elektrischen Gerätes, insbesondere eines Mobiltelefons oder dergleichen transformiert wird. Im dargestellten Ausführungsbeispiel ist das Sockelteil 4 mit den Steckerstiften 5 entsprechend einem Schuko-Stecker bzw. entsprechend dem Steckertyp CEE7/4 ausgebildet. Andere Ausbildungen des Sockelteils und der Steckerstifte entsprechend anderer länderspezifischer Normen liegen ebenfalls im Rahmen der Erfindung. Das Gehäuseteil 4 kann zur Aufnahme einer Leiterplatte dienen, auf der eine elektronische Schaltung angeordnet ist, mit der spezifische Funktionen des erfindungsgemäßen Ladegerätes 1 realisiert werden, worauf noch in der weiteren Beschreibung eingegangen wird. Hierbei ist das Gehäuse 2 z. B. in seinem Innenraum durch eine elektrisch isolierende Wand (nicht dargestellt) in einem Primär- und einen Sekundärplatinenbereich unterteilt. An ihrer von dem Sockelteil 4 weg weisenden Frontseite 6 ist eine Geräteauflage 7 vorhanden. Diese Geräteauflage 7 besteht aus einem Gehäusevorsprung 8, der eine Auflagefläche 9 und eine Frontfläche 10, eine Unterseitenfläche 11 sowie Seitenflächen 12 aufweist. Vorteilhafterweise ist der Gehäusevorsprung 8 einteilig mit dem Gehäuseabschnitt 4 ausgebildet. Im gezeigten Ausführungsbeispiel verläuft die Auflagefläche 9 senkrecht zur Fläche der Frontseite 6 und die Unterseitenfläche 11 verläuft parallel zur Auflagefläche 9 und stellt eine Verlängerung einer Unterseitenfläche des Gehäuseabschnittes 4 dar. Wie sich aus Fig. 1 ergibt, erstreckt sich der Gehäusevorsprung 8 über die gesamte Breite des Gehäuseabschnittes 4. In der Auflagefläche 9 ist ein Ladestecker 13 angeordnet, dessen Steckkontakte mit der Ladeelektronik im Sockelteil 3 verbunden sind. Dieser Ladestecker 13 ist vorteilhafterweise mittig auf der Auflagefläche 9 angeordnet, wobei sein Abstand von der Frontseite 6 derart bemessen ist, dass die auf dem Markt befindlichen aufzuladenden Geräte, insbesondere Mobiltelefone leicht und sicher aufgesteckt werden können, ohne dass das Mobiltelefon mit seiner Außenfläche an der Frontseite G des Gehäuses 2 einen engen Berührungskontakt aufweist. Bei dem erfindungsgemäß verwendeten Ladestecker 13 kann es sich beispielsweise um einen USB-Stecker handeln. Erfindungsgemäß kann es vorteilhaft sein, wenn der Ladestecker 13 in der Auflagefläche 9 um 180° drehbar gelagert ist, so dass eine Anpassung an unterschiedliche Anordnungen im zu ladenden Gerät möglich ist. Darüber hinaus liegt es ebenfalls im Rahmen der Erfindung, wenn der Ladestecker 13 jeweils über eine Steckverbindung mit der Geräteauflage selbst verbunden ist, so dass ein Umstecken oder Auswechseln des Ladesteckers 13 zur Anpassung an die Gegebenheiten des zu ladenden Gerätes erfolgen kann. Es kann ebenfalls zweckmäßig sein, wenn der Ladestecker 13 in Bezug auf seinen Abstand zur Frontseite 9 verschiebbar gelagert ist, um hierdurch eine zusätzliche Variabilität in Bezug auf die unterschiedlichen Größen der aufzuladenden Geräte zu erhalten. Eine weitere vorteilhafte Ausführung des Ladesteckers besteht darin, dass der Ladestecker 13 einen elastischen Haltefortsatz aufweist, in dem die Anschlusskontakte des Ladesteckers 13 enthalten sind. Hierdurch ist eine elastische Lagerung des Ladesteckers 13 in der Geräteauflage 7 möglich. Der derart ausgebildete Haltefortsatz des Ladesteckers 13 besteht vorzugsweise aus einem elastischen elektrisch isolierenden Kunststoffmaterial, wobei der Haltefortsatz zweckmäßigerweise an den Ladestecker 13 angespritzt ist. Die Auflagefläche 9 kann weiterhin vorteilhafterweise zumindest teilweise im Bereich um den Ladestecker 13 herum spiegelnd ausgebildet sein, wodurch das Aufstecken des aufzuladenden Gerätes erleichtert wird. Auch kann auf der Auflagefläche 9 der Geräteauflage 7 eine Beschichtung mit einem Material mit erhöhter Haftreibung, z. B. Silikon oder dergleichen, aufgebracht sein, so dass die Standsicherheit eines aufgesteckten zu ladenden Gerätes verbessert wird. Wie aus den beiliegenden Figuren zu erkennen ist, ist in einem Abstand zur Geräteauflage 7 an dem Gehäuseabschnitt 4 eine Gerätestütze 14 derart gelagert, dass die Gerätestütze 14 in eine Ladestellung, wobei sie in Verlängerung der Frontwand 6 verläuft, und eine Abstützung für das zu ladende Gerät bilden kann, und in eine Ruhestellung, in der sie zu der Frontwand 6 parallel verläuft und die Frontwand 6 des Gehäuseabschnitts teilweise zumindest bis zu dem Ladestecker 13 abdeckt, geschwenkt werden kann. Hierbei kann es vorteilhaft sein, wenn die Gerätestütze 14 an dem Gehäuseabschnitt 4 am der Geräteauflage 7 gegenüberliegenden Randbereich über eine Gelenkanordnung 15 schwenkbar gelagert ist. Die Frontwand 6 des Gehäuseabschnittes 4 ist vorteilhafterweise rechteckig ausgebildet. Es ist zweckmäßig, wenn die Gerätestütze 14 der Form bzw. der Umrisskontur der Frontwand 6 angepasst ist. Die Gerätestütze 14 weist ein Gehäuse 16 auf, dessen Dicke d vorzugsweise der Tiefe T der Geräteauflage 7 und deren Breite b der Breite B der Frontwand 6 entspricht. Die Höhe h des Gehäuses 16 kann z. B. derart bemessen sein, dass sie in ihrer Ruhestellung, siehe Fig. 6, unmittelbar vor dem Ladestecker 13 endet. Somit ist der Ladestecker 13 in der Ruhestellung der Gerätestütze 14 von oben abgedeckt und es ergibt sich eine kompakte, glattflächige Einheit ohne Überstände. Zudem ist der Spalt zwischen der Geräteauflage 7 und dem gegenüberliegenden Ende der Gerätestütze 14 nicht größer als der Überstand des Ladesteckers 13 gegenüber der Auflagefläche 9, so dass dieser klein genug ist, um das Eindringen von Schmutz und Feuchtigkeit in den Ladestecker 13 zu verhindern und darüber hinaus eine Berührung mit den stromführenden Kontakten des Ladesteckers zu verhindern.

Erfindungsgemäß ist es ebenfalls möglich, wenn die Gerätestütze 14 in ihrer Anlagefläche 17 sowie im angrenzenden Randbereich ihrer Kopfwand 18, die der Gelenkanordnung 15 gegenüberliegt, eine Aussparung aufweist, in der der Ladestecker 13 in der Ruhestellung der Gerätestütze 14 ganz oder teilweise aufgenommen wird. In diesem Fall kann die Höhe h der Gerätestütze 14 der Höhe H der Frontwand 6 entsprechen. Diese Ausführung hat den Vorteil, dass eine Kammerung des Ladesteckers 13 in der Ruhestellung der Gerätestütze verwirklicht wird. Das die Gerätestütze 14 bildende Gehäuse 16 kann dazu dienen, elektrische Funktionsbauteile, z. B. einen Lautsprecher, ein Mikrofon und/oder ein W-LAN-Empfangsteil aufzunehmen. Derartige zusätzliche elektrische Funktionsteile können dann über in dem Gehäuse 4 befindliche elektronische Schaltungen mit dem Ladestecker 13 verbunden sein, so dass die erfindungsgemäße Ladevorrichtung in ihrer Funktionalität erweitert werden kann.

Mit der Gelenkanordnung 15 ist zweckmäßigerweise eine Federanordnung kombiniert, die bewirkt, dass die Gerätestütze 14 aus der Ruhestellung in die Ladestellung entgegen einer von der Federanordnung erzeugten Federkraft schwenkbar ist, so dass die Gerätestütze 14 auch durch die Federkraft aus der Ladestellung in die Ruhestellung zurück bewegt wird. Diese Rückbewegung der Gerätestütze 14 in die Ruhestellung kann derart gesteuert sein, dass bei Erreichen der Ruhestellung nur noch eine geringe Federkraft vorhanden ist, so dass ein starkes Anschlagen der Gerätestütze 14 verhindert wird. Zusätzlich oder alternativ kann auch eine Dämpfungsvorrichtung integriert sein, die die Schließbewegung der Gerätestütze 14 in die Ruhestellung dämpft. Die Federanordnung bewirkt auch, dass sich die Gerätestütze 14 gegen das aufzuladende Gerät im aufgesteckten Zustand an dessen Rückwand federnd anlegt, und hierdurch dessen Position stabilisiert, wobei durch die federnde Anlage auch ein Dickenausgleich bewirkt wird.

Es kann auch von Vorteil sein, wenn die Gelenkanordnung 15 eine Rastvorrichtung aufweist, so dass die Gerätestütze 14 in verschiedenen Schwenkstellungen durch Einrasten fixiert werden kann. Hierbei kann die jeweilige Raststellung durch eine äußere Krafteinwirkung wieder aufgehoben werden. Die Gelenkanordnung 15 der erfindungsgemäßen Ladevorrichtung 1 kann auch einen Endanschlag für die Begrenzung der Schwenkbewegung der Gerätestütze 14 aufweisen, so dass hierdurch eine Begrenzung des Schwenkwinkels sichergestellt ist und somit eine Beschädigung vermieden wird.

In ihrer Frontfläche 10 weist die Geräteauflage 7 vorteilhafterweise Lichtsignalgeber 19 auf, die zum Anzeigen des Lade- und/oder des Betriebszustandes, insbesondere durch Farbe- und/oder Pulsfrequenz und/oder Dauerlicht und/oder Lauflicht und/oder Füllstandsanzeige durch Teilbeleuchtung dienen. Zusätzlich kann auch im Gehäuse 2 oder aber in der Gerätestütze 14 ein Dauerlicht angeordnet sein, das beispielsweise im aufgesteckten Zustand des zu ladenden Gerätes leuchtet.

Außerdem kann erfindungsgemäß vorgesehen sein, dass die Ladeelektronik, die sich innerhalb des Sockels 3 befindet, so aufgebaut ist, dass sie sich beim Einschalten automatisch in einen Stand-by-Modus versetzt und bei eingestecktem zu ladendem Gerät automatisch der Ladevorgang beginnt und nach dem Ende des Ladevorgangs sich selbstständig in einen Stand-by-Modus zurückversetzt. Zusätzlich kann es zweckmäßig sein, wenn durch eine separate Zeitschaltung, die in der Ladeelektronik integriert ist, nach Ablauf einer bestimmten Zeitspanne nach dem Ende des Ladevorgangs die Ladeelektronik automatisch von der Netzversorgung getrennt wird. Ebenfalls kann es zweckmäßig sein, wenn durch die Schwenkbewegung der Gerätestütze 14 über eine Schalt-Kontakteinheit, beispielsweise einen Read-Kontakt, die Netzversorgung in der Ruhestellung der Geräteauflage abgeschaltet und in der Ladestellung die Gerätestütze 14 eingeschaltet wird.

Eine weitere zweckmäßige Ausgestaltung der erfindungsgemäßen Ladevorrichtung kann darin bestehen, dass der Sockel 3 am Gehäuseabschnitt 4 um 90° drehbar gelagert ist, so dass hierdurch unterschiedliche Einbaulagen einer Steckdose berücksichtigt werden können.

Die vorliegende Erfindung ist nicht auf das gezeigte Ausführungsbeispiel beschränkt, sondern umfasst auch alle im Sinne der Erfindung gleichwirkende Mittel. Auch ist die vorliegende Erfindung nicht auf die konkrete in den Ausführungsbeispielen gezeigte Form beschränkt, was ebenfalls für die Anordnung der Gelenkanordnung 15 gilt. Im dargestellten Ausführungsbeispiel ist die Frontwand 6 des Gehäuseabschnittes 4 unter einem spitzen Winkel α zu einer Ebene verlaufend eingezeichnet, die durch die Längsachsen der Kontaktstifte 5 verläuft. Hierdurch ergibt sich eine ebenfalls leicht geneigte Stellung des aufzuladenden Gerätes im aufgesteckten Zustand, da die Auflagefläche 9 vorzugsweise senkrecht zur Frontfläche 6 angeordnet ist. Jedoch ist eine derartige Anordnung nicht zwangsläufig, sondern es kann auch beispielsweise eine senkrechte Anordnung der Frontfläche 6 zur durch die Längsachse X der Kontaktstifte 5 verlaufenden Ebene gegeben sein. Auch liegt es im Rahmen der Erfindung, wenn die Anlagefläche 17 der Gerätestütze 13 selbst derart elastisch verformbar ist, und zwar senkrecht zur Anlagefläche, dass hierdurch ein Dickenausgleich unterschiedlicher Dicken des aufsteckenden Gerätes in der Anlagestellung erfolgt.

Erfindungsgemäß sind die vorstehend beschriebenen Merkmale alle in Alleinstellung für sich wesentlich, und es liegt im Rahmen der Erfindung, dass diese einzelnen Merkmale mit jedem der anderen Merkmale unter Bezugnahme auf die Merkmale des Anspruchs 1 kombiniert werden können.

## Patentansprüche

1. Ladevorrichtung (1), insbesondere zum elektrischen Laden eines mit einem wiederaufladbaren Energiespeicher versehenen elektronischen Gerätes, z. B. eines Mobiltelefons, bestehend aus einem Gehäuse (2) mit einer in dem Gehäuse (2) angeordneten Ladeelektronik, wobei eine Rückwand des Gehäuses (2) ein Steckerteil eines Netzsteckers und ein Frontwand (6) des Gehäuses (2) eine feststehende Geräteauflage (7) für das elektronische Gerät aufweist, wobei in der Geräteauflage (7) ein Ladestecker (13) angeordnet ist,
**dadurch gekennzeichnet, dass** in einem Abstand zur Geräteauflage (7) eine Gerätestütze (14) am Gehäuse (2) derart schwenkbar gelagert ist, dass die Gerätestütze (14) in einer Ladestellung in Verlängerung der Frontwand (6) des Gehäuses (2) verläuft und eine Abstützung für das zu ladende Gerät bilden kann und in einer Ruhestellung parallel zur Frontwand (6) des Gehäuses (2) verläuft und diese zumindest bis zum Ladestecker (13) abdeckt, und vorzugsweise die Gerätestütze (14) derart ausgebildet ist, dass in ihrer Ladestellung zwischen dem aufgesteckten Gerät und der Gerätestütze (14) eine federelastische Anlage einstellbar ist.

2. Ladevorrichtung nach Anspruch 1,
**dadurch gekennzeichnet, dass** die Gerätestütze (14) derart bemessen ist, dass sie in der eingeschwenkten Ruhestellung unmittelbar oberhalb des Ladesteckers (13) endet.

3. Ladevorrichtung nach Anspruch 1,
**dadurch gekennzeichnet, dass** die Gerätestütze (14) in ihrer Anlagefläche (17) zur Aufnahme des Ladesteckers (13) in ihrer Ruhestellung eine Ausnehmung aufweist und derart bemessen ist, dass sie in ihrer Ruhestellung an der Geräteauflage (7) endet.

4. Ladevorrichtung nach einem der Ansprüche 1 bis 3,
**dadurch gekennzeichnet, dass** die Gerätestütze (14) über eine Gelenkanordnung (15) mit dem Gehäuse (2) verbunden ist, wobei vorzugsweise ein Endanschlag für eine maximale Schwenkstellung vorhanden ist.

5. Ladevorrichtung nach Anspruch 4,
**dadurch gekennzeichnet, dass** mit der Gelenkanordnung (15) eine Federanordnung kombiniert ist, wodurch die Gerätestütze (14) derart mit einer Kraft beaufschlagt ist, dass mittels der Federkraft die Gerätestütze (14) über die Lagerung am Gehäuse (2) von der ausgeschwenkten Ladestellung in Richtung der Geräteauflage in die eingeschwenkte Ruhestellung bewegt wird.

6. Ladevorrichtung nach einem der Ansprüche 1 bis 5,
**dadurch gekennzeichnet, dass** der Ladestecker (13) in der Geräteauflage (7) um 180 ° drehbar und/oder steckbar gelagert ist.

7. Ladevorrichtung nach einem der Ansprüche 1 bis 6,
**dadurch gekennzeichnet, dass** der Ladestecker (13) in der Geräteauflage (7) in Bezug auf den Abstand zur Frontwand (6) verschiebbar gelagert ist.

8. Ladevorrichtung nach einem oder mehreren der Ansprüche 1 bis 7,
**dadurch gekennzeichnet, dass** der Ladestecker (13) in der Geräteauflage (7) mittels eines elastischen Halteansatzes elastisch gelagert ist.

9. Ladevorrichtung nach einem der Ansprüche 1 bis 8,
**dadurch gekennzeichnet, dass** die Geräteauflage (7) auf Ihrer Auflagefläche (9) zumindest teilweise eine spiegelnde Oberfläche aufweist.

10. Ladevorrichtung nach einem der Ansprüche 1 bis 9,
**dadurch gekennzeichnet, dass** ein Teil der Auflagefläche (9) mit einem eine Haftung bewirkenden Material, insbesondere Silikon, beschichtet ist.

11. Ladevorrichtung nach einem der Ansprüche 1 bis 10,
**dadurch gekennzeichnet, dass** das Gehäuse in seinem Innenraum durch eine elektrisch isolierende Wand in einen Primärplatinenbereich und einen Sekundärplatinenbereich aufgeteilt ist.

12. Ladevorrichtung nach einem der Ansprüche 1 bis 11,
**dadurch gekennzeichnet, dass** das Gehäuse (2) derart zweiteilig ausgebildet ist, dass es aus einem den Netzstecker aufweisenden Gehäuseabschnitt (3) und einem die Frontwand (6) aufweisenden Gehäuseabschnitt (4) besteht.

13. Ladevorrichtung nach Anspruch 12,
**dadurch gekennzeichnet, dass** der Gehäuseabschnitt (3) an dem Gehäuseabschnitt (4) um 90 ° drehbar gelagert ist.

14. Ladevorrichtung nach einem der Ansprüche 1 bis 13,
**dadurch gekennzeichnet, dass** die Gerätestütze (14) eine im Gehäuse (2) und der Gerätestütze (14) angeordnete Schaltereinheit aufweist, mit der die Ladeelektronik von der über den Netzstecker anliegenden Netzspannung in Abhängigkeit von der Stellung der Gerätestütze (14) getrennt werden kann.

15. Ladevorrichtung nach einem der Ansprüche 1 bis 14,
**dadurch gekennzeichnet, dass** das Gehäuse (2) in Verbindung mit der Gelenkanordnung (15) einen Anschlag aufweist, der die Schwenkbewegung der Gerätestütze (14) in die Ladeposition begrenzt.

16. Ladevorrichtung nach einem der Ansprüche 1 bis 15,
**dadurch gekennzeichnet, dass** die Gerätestütze (14) mittels einer mit der Gelenkanordnung (15) verbundenen Rasteinrichtung in unterschiedlicher Schwenkstellung arretierbar ist.

17. Ladevorrichtung nach einem der Ansprüche 1 bis 16,
**dadurch gekennzeichnet, dass** die Frontseite (6) des Gehäuses (2) unter einem spitzen Winkel (α) kleiner 90 ° und größer 80 ° zu einer Ebene durch die Längsachse (X) der Steckerstifte (5) verläuft.
